# EUROPEAN PATENT APPLICATION

(11) **EP 4 810 959 A1**
(43) Date of publication of application: **23.09.2026**
(21) Application number: 24891081.2
(22) Date of filing: 19.09.2024
(51) Int. Cl.: G01N 35/02, G01N 1/28, G01N 1/31, G01N 1/38, G01N 35/00

(54) **SPECIMEN SLIDE STIRRING DEVICE**

(30) Priority: 15.11.2023 JP 2023194367
(71) Applicant: Hitachi High-Tech Corporation, Minato-ku Tokyo 105-6409 (JP)
(72) Inventor: KONDO, Takeshi, Tokyo 100-8280 (JP); MIYASAKA, Tooru, Tokyo 100-8280 (JP)
(74) Representative: MERH-IP Matias Erny Reichl Hoffmann Patentanwälte PartG mbB
(86) International application number: PCT/JP2024/033466
(87) International publication number: WO 2025/105039

(57) **Abstract**

In order to ensure temperature performance of a reagent on a slide without causing a heat transfer surface sliding due to vibration, a sample slide stirring device according to the present invention stirs and mixes, through vibration, a buffer liquid on a sample slide on which a sample is held on the surface of the sample slide, and a stain reaction reagent required for staining the sample, and the sample slide stirring device includes: a slide stage holding the sample slide; a temperature adjustment unit performing temperature adjustment of the sample slide; a heat transfer unit transferring heat to the sample slide such that the temperatures of the temperature adjustment unit and the sample slide are substantially constant; and a lifting/lowering stage lifting and lowering a slide holding unit. When the buffer liquid and the stain reaction reagent are stirred, the lifting/lowering stage is lowered to separate, before the buffer liquid and the stain reaction reagent are vibrated, the heat transfer unit from a vibration unit vibrating the buffer liquid and the stain reaction reagent, and at the time of the heat transfer that transfers heat to the sample slide through the heat transfer unit, the lifting/lowering stage is lifted to bring the heat transfer unit into contact with the vibration unit.

## Description

### Technical Field

The present invention relates to a sample slide stirring device. More specifically, the present invention relates to a sample slide stirring device that is suitable for stirring and mixing, through vibration, a buffer liquid on a sample slide on which a sample is held on the surface of the sample slide, and a stain reaction reagent required for staining the sample.

### Background Art

In the pathology field, the development of an automatic staining device that mechanizes a staining process in immunostaining detecting an antigen that is a kind of protein in a tissue sample has advanced in recent years.

In the staining process, a buffer liquid and various stain reaction reagents are dropped into a sample liquid on a slide glass for each step. To normally stain a sample, the buffer liquid and the stain reaction reagent are required to be stirred by a stirring device, thereby reacting the sufficiently mixed reagent with the sample.

There has been known a stirring device in which as a method for mixing a reagent on a slide glass, stirring is performed by vibrating the slide glass on which the reagent is dropped.

As the conventional technique literatures of this stirring device, for example, Patent Literatures 1 and 2 can be given.

To efficiently perform a process from the conveyance of a plurality of slide holders from a preparation position to an imaging position, through the imaging of the entire image and the micro image of all slide glass samples in the slide holder, to the conveyance to the preparation position, by minimizing a arrangement space, Patent Literature 1 describes a slide glass conveying device that has a slide holder conveying device, a macro imaging slide glass sample conveying device, and a micro imaging slide glass sample conveying device. The slide holder conveying device has a multi joint arm provided downward from the upper portion of the slide holder conveying device and movable in a three-dimensional direction, and a slide holder grasping unit provided at the distal end portion of the multi joint arm and grasping and grasp releasing the slide holder from above.

On the other hand, to achieve taking out a slide glass from within a slide glass cassette and reliable conveyance to a predetermined position by a simpler configuration, Patent Literature 2 describes a slide glass conveying device that includes at least a drawing out hand having a protrusion for engaging the slide glass, the protrusion being provided at the distal end of the drawing out hand, a driving mechanism, and a positioning guide having a taper introduction unit provided at a position into which the taken out slide glass enters. The driving mechanism performs a series of operations of the forward movement, the lifting, and the backward movement of the drawing out hand. By the series of operations, each slide glass to be taken out is placed one by one on the drawing out hand. In this case, the slide glass placed on the drawing out hand is drawn out in a state where the protrusion of the drawing out hand is abutted on the side surface of the slide glass, so that with the backward movement operation of the drawing out hand, a drawing out end portion positioned at the end of the slide glass is pushed into the taper introduction unit of the positioning guide. As a result, both side surfaces of the taken out slide glass are smoothly led by guide rails of the positioning guide.

### Citation List

### Patent Literature

Patent Literature 1: Japanese Unexamined Patent Application Publication No. 2012-177804
Patent Literature 2: Japanese Patent No. 4871263

### Summary of Invention

### Technical Problem

By the way, the automatic staining device using the stirring device is required to ensure the temperature performance of the reagent on the slide without causing the sliding of the heat transfer surface due to vibration in order to maintain the temperature of the reagent on the slide at the constant temperature (15°C to 95°C), and the development of the stirring device for achieving this has been desired.

However, in Patent Literatures 1 and 2 described above, none is described for solutions for solving the above problem.

The present invention has been made in view of the above point, and has an object to provide a sample slide stirring device that can ensure the temperature performance of a reagent on a slide without causing the sliding of a heat transfer surface due to vibration.

### Solution to Problem

In order to achieve the above object, a sample slide stirring device of the present invention stirs and mixes, through vibration, a buffer liquid on a sample slide on which a sample is held on the surface of the sample slide, and a stain reaction reagent required for staining the sample, and the sample slide stirring device includes: a slide stage holding the sample slide; a temperature adjustment unit performing temperature adjustment of the sample slide; a heat transfer unit transferring heat to the sample slide such that the temperatures of the temperature adjustment unit and the sample slide are substantially constant; and a lifting/lowering stage lifting and lowering a slide holding unit. When the buffer liquid and the stain reaction reagent are stirred, the lifting/lowering stage is lowered to separate, before the buffer liquid and the stain reaction reagent are vibrated, the heat transfer unit from a vibration unit vibrating the buffer liquid and the stain reaction reagent, and at the time of the heat transfer that transfers heat to the sample slide through the heat transfer unit, the lifting/lowering stage is lifted to bring the heat transfer unit into contact with the vibration unit.

### Advantageous Effects of Invention

According to the present invention, it is possible to ensure the temperature performance of a reagent on a slide without causing the sliding of a heat transfer surface due to vibration.

### Brief Description of Drawings

Fig. 1 is a first embodiment of a sample slide stirring device of the present invention, and is a conceptual diagram illustrating the lowering state of a lifting/lowering stage.
Fig. 2 is the first embodiment of the sample slide stirring device of the present invention, and is a conceptual diagram illustrating the lifting state of the lifting/lowering stage.
Fig. 3 is a perspective view illustrating the arrangement state of a slide conveying unit, a vibration unit holding stage, a slide fixing unit, and a slide stage adopted for the first embodiment of the sample slide stirring device of the present invention.
Fig. 4 is a diagram illustrating the detail of the connection state of a sample slide, the slide fixing unit, and a vibration fixing unit according to the first embodiment of the sample slide stirring device of the present invention.
Fig. 5 is a front view illustrating the lifting/lowering configuration of the lifting/lowering stage according to the first embodiment of the sample slide stirring device of the present invention.
Fig. 6 is a side view of the lowering state of the lifting/lowering stage of Fig. 5.
Fig. 7 is a side view of the lifting state of the lifting/lowering stage of Fig. 5.

### Description of Embodiments

Hereinbelow, a sample slide stirring device of the present invention will be described on the basis of an illustrated embodiment. It should be noted that in the respective drawings, the same reference numerals are used for the same components.

### First Embodiment

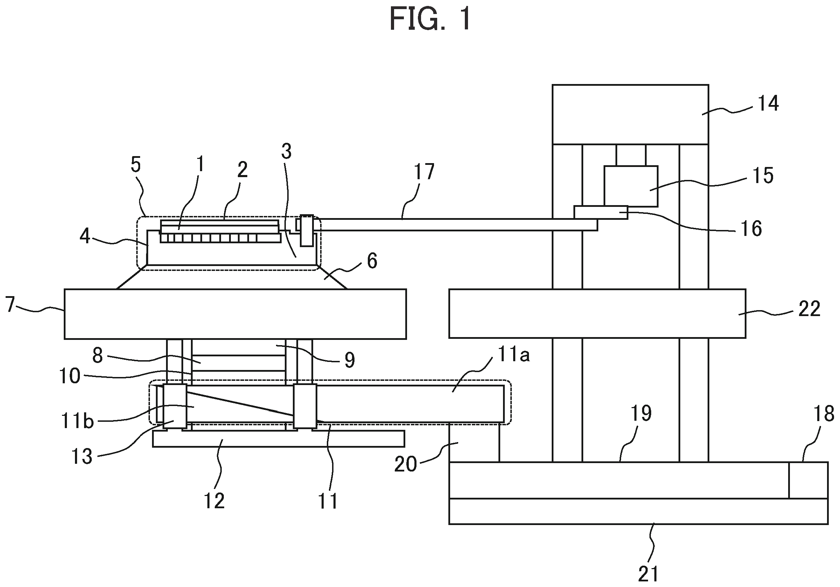

The sample slide stirring device of the present invention will be described with reference to Figs. 1 to 7.

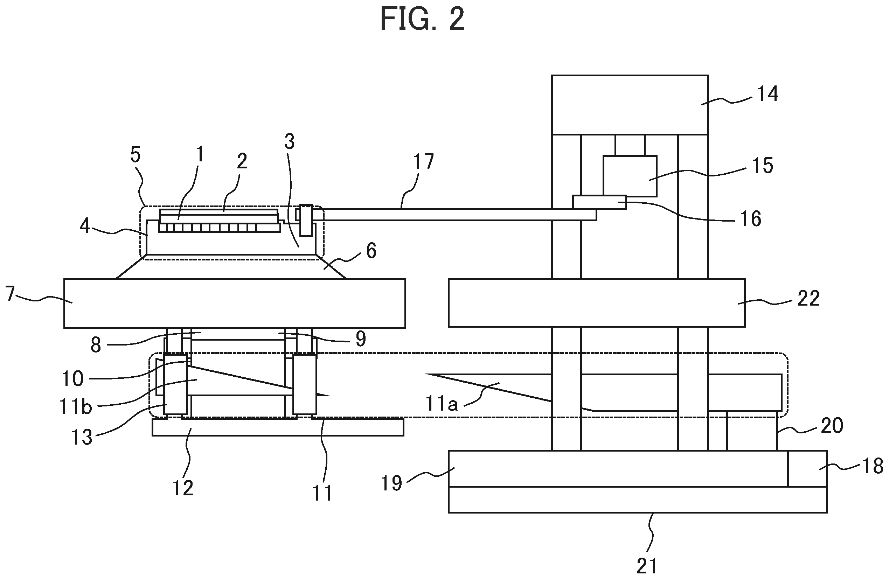

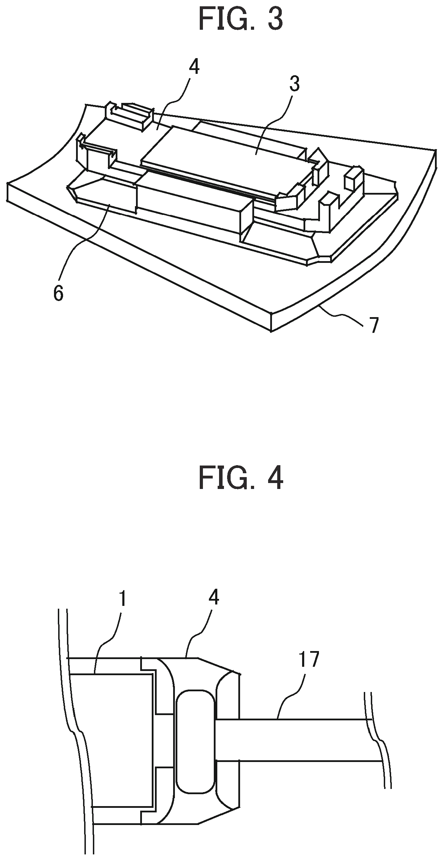

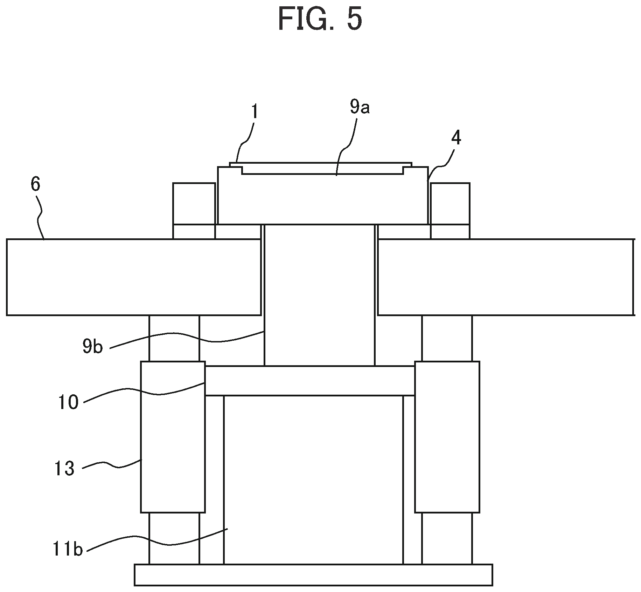

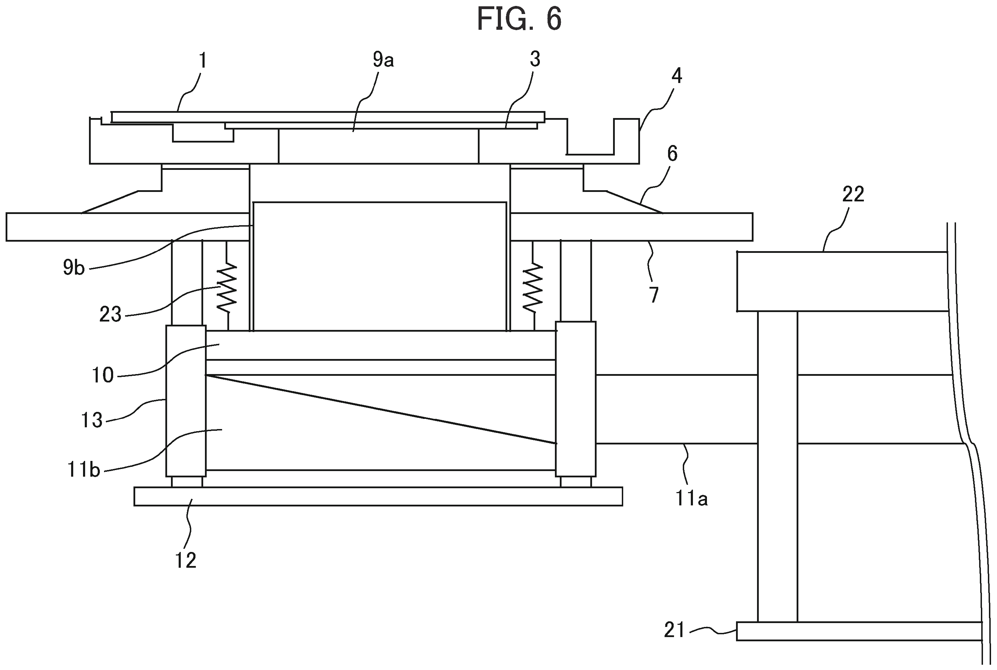

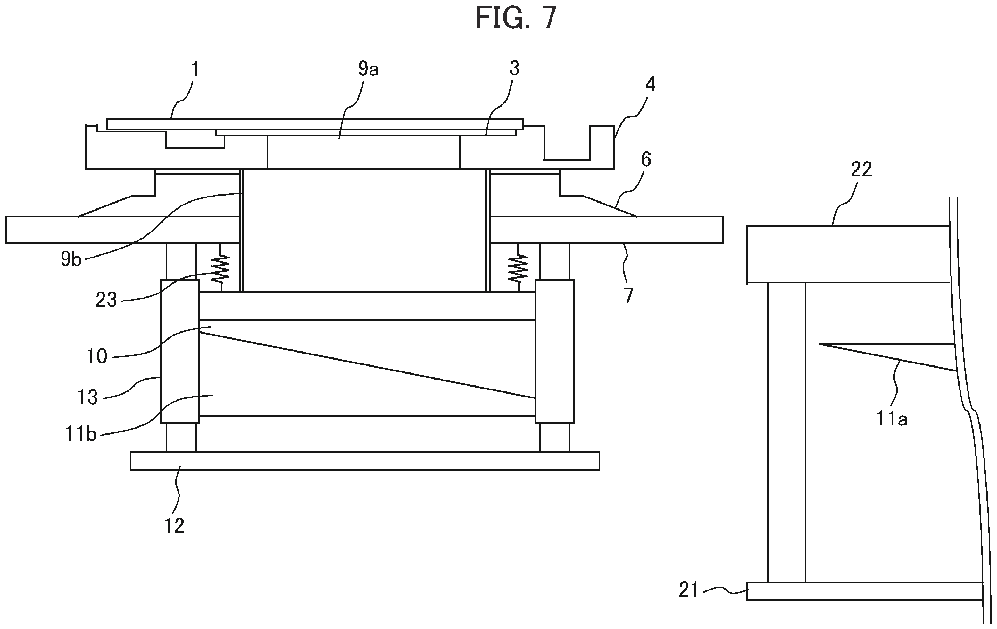

Fig. 1 is a first embodiment of the sample slide stirring device of the present invention, and illustrates the lowering state of a lifting/lowering stage 11, Fig. 2 illustrates the lifting state of the lifting/lowering stage 11, Fig. 3 illustrates the arrangement state of a slide conveying unit 7, a vibration unit holding stage 6, a slide fixing unit 4, and a slide stage 3 adopted for the first embodiment of the sample slide stirring device of the present invention, Fig. 4 illustrates the detail of the connection state of a sample slide 1, the slide fixing unit 4, and a vibration fixing unit 17 according to the first embodiment of the sample slide stirring device of the present invention, Fig. 5 illustrates a front view of the lifting/lowering configuration of the lifting/lowering stage 11 according to the first embodiment of the sample slide stirring device of the present invention, Fig. 6 illustrates a side view of the lifting state of the lifting/lowering stage 11 of Fig. 5, and Fig. 7 illustrates a side view of the lowering state of the lifting/lowering stage 11 of Fig. 5.

As illustrated in Figs. 1 and 2, the sample slide stirring device of this embodiment stirs and mixes a buffer liquid 2 on the sample slide 1 on which a sample is held on the surface of the sample slide 1, and a stain reaction reagent required for staining the sample, by vibrating a vibration unit 5 by a driving force from a vibration driving unit (for example, a driving motor) 14 described later.

Specifically, the sample slide stirring device of this embodiment is schematically configured to include the slide stage 3 holding the sample slide 1, a temperature adjustment unit (for example, a Peltier element) 8 performing the temperature adjustment of the sample slide 1, a heat transfer unit 9 detecting the change in temperature of the temperature adjustment unit 8 by the Peltier element and a thermocouple and transferring heat to the sample slide 1 such that the temperatures of the temperature adjustment unit 8 and the sample slide 1 is substantially constant, and the lifting/lowering stage 11 including a lifting/lowering stage upper portion 11a and a lifting/lowering stage lower portion 11b lifting and lowering a slide holding unit in which the heat transfer unit 9, the temperature adjustment unit 8, and a heat insulation unit (a heat insulation material, for example, plastic) 10 provided downward of the temperature adjustment unit 8 are configured to be supported by the lifting/lowering stage lower portion 11b.

Then, when the buffer liquid 2 and the stain reaction reagent are stirred, the lifting/lowering stage upper portion 11a of the lifting/lowering stage 11 is lowered to separate the heat transfer unit 9 transferring heat to the sample slide 1 from the vibration unit 5 vibrating the buffer liquid 2 and the stain reaction reagent, before the buffer liquid 2 and the stain reaction reagent are vibrated (the state of Figs. 1 and 6), and on the other hand, at the time of the heat transfer that transfers heat to the sample slide 1 through the heat transfer unit 9, the lifting/lowering stage lower portion 11b of the lifting/lowering stage 11 is lifted to bring the heat transfer unit 9 into contact with the vibration unit 5 (to bring a vibration side heat transfer unit 9a illustrated in Figs. 6 and 7 into contact with the vibration unit 5) (the state of Figs. 2 and 7). The temperature adjustment unit 8 performs the temperature adjustment such that the temperature of the stain reaction reagent on the sample slide 1 is adjusted to a predetermined temperature.

In addition, the vibration unit 5 is connected with the vibration driving unit 14 through an elliptic cam 15, a linear motion link unit 16, and the vibration fixing unit 17, as illustrated in Fig. 4, and is vibrated by transmitting the driving force of the vibration driving unit 14 through the elliptic cam 15, the linear motion link unit 16, and the vibration fixing unit 17.

In addition, when the sample slide 1 held by the slide stage 3 through the vibration holding stage 6 above the disc-shaped slide conveying unit 7 reaches any position, the vibration unit 5 is connected with the vibration fixing unit 17 on the side of a driving fixing unit 22 in disc shape, as illustrated in Fig. 4.

In addition, the connection portions of the lifting/lowering stage upper portion 11a and the lifting/lowering stage lower portion 11b are disposed to be opposite to each other in a horizontal direction, and when the lifting/lowering stage lower portion 11b is lowered (the state of Figs. 1 and 6), the connection portions of the lifting/lowering stage upper portion 11a and the lifting/lowering stage lower portion 11b are connected with each other, and when the lifting/lowering stage lower portion 11b is lifted (the state of Figs. 2 and 7), the lifting/lowering stage upper portion 11a is moved in the horizontal direction (the right direction in the drawing) by transmitting the driving force of a lifting/lowering driving unit (for example, a linear motion motor) 18 placed on a lifting/lowering driving device fixing unit 21, through a linear motion unit 19 and a linear motion stage 20, thereby releasing the connection with the lifting/lowering stage lower portion 11b, so that the lifting/lowering stage lower portion 11b is lifted to bring the heat transfer unit 9 into contact with the vibration unit 5.

Specifically, when the lifting/lowering stage lower portion 11b is lowered, the lifting/lowering stage lower portion 11b and a lifting/lowering stage fixing unit 12 are fixed, as illustrated in Fig. 6, and the lifting/lowering stage lower portion 11b and the lifting/lowering stage upper portion 11a are contacted to apply the force to the lifting/lowering stage lower portion 11b, so that a lifting/lowering link unit 13 is lowered to lower the lifting/lowering stage lower portion 11b.

On the other hand, contrary to when the lifting/lowering stage lower portion 11b is lowered, when the lifting/lowering stage lower portion 11b is lifted, as illustrated in Fig. 7, the contact of the lifting/lowering stage lower portion 11b and the lifting/lowering stage upper portion 11a is released, so that the lifting/lowering link unit 13 is lifted to lift the lifting/lowering stage lower portion 11b.

It should be noted that between the slide conveying unit 7 and the heat insulation unit 10, a lift holding unit including a spring expanded when the lifting/lowering stage lower portion 11b is lifted, and shrunk when the lifting/lowering stage lower portion 11b is lifted is disposed.

In addition, the connection portions of the lifting/lowering stage upper portion 11a and the lifting/lowering stage lower portion 11b are formed in wedge shape, thereby enabling space saving.

By providing such the configuration of this embodiment, when the lifting/lowering stage lower portion 11b is lowered (the state of Figs. 1 and 6), the heat transfer unit 9 connected with the lifting/lowering stage lower portion 11b of the lifting/lowering stage 11 is lowered to be separated from the vibration unit 5 (the thermocouple is provided on the vibration side, and when the separation of the heat transfer unit 9 from the vibration unit 5 is performed, the temperature is lowered, so that it is judged that the separation of the heat transfer unit 9 from the vibration unit 5 is performed by detecting the lowered temperature by the thermocouple), so that in this state, the vibration unit 5 can be vibrated. In addition, when the lifting/lowering stage lower portion 11b of the lifting/lowering stage 11 is lifted (the state of Figs. 2 and 7), the heat transfer unit 9 connected with the lifting/lowering stage lower portion 11b is lifted, so that the heat transfer unit 9 is brought into contact with the vibration unit 5, and in a case where the sample slide 1 is held to the vibration unit and at the time of the non-vibration in which the buffer liquid 2 and the stain reaction reagent are not vibrated, the temperature of the buffer liquid 2 on the sample slide 1 can be adjusted by the temperature adjustment unit 8. It should be noted that the reference numeral 9b indicated in Figs. 6 and 7 denotes a lifting/lowering side heat transfer unit.

Therefore, according to the sample slide stirring device of this embodiment, when the lifting/lowering stage lower portion 11b of the lifting/lowering stage 11 is lowered (the state of Figs. 1 and 6), the heat transfer unit 9 connected with the lifting/lowering stage lower portion 11b is also lowered to be separated from the vibration unit 5, so that in this state, the vibration unit 5 is vibrated, thereby enabling the stirring without causing the sliding surface, and the vibration can prevent the deterioration of the heat transfer performance due to the sliding and the wearing of the slide stage 3 and the heat transfer unit 9.

In addition, when the lifting/lowering stage lower portion 11b of the lifting/lowering stage 11 is lifted (the state of Figs. 2 and 7), the heat transfer unit 9 connected with the lifting/lowering stage lower portion 11b is lifted, so that the heat transfer unit 9 is brought into contact with the vibration unit 5, and in a case where the sample slide 1 is held to the vibration unit 5 and at the time of the non-vibration in which the buffer liquid 2 and the stain reaction reagent are not vibrated, the temperature of the buffer liquid 2 on the sample slide 1 can be adjusted by the temperature adjustment unit 8.

Therefore, the sample slide stirring device of this embodiment can ensure the temperature performance of the reagent on the slide without causing the sliding of the heat transfer surface due to the vibration.

The present invention is not limited to the above-described embodiments, and further includes various modifications. For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

- 1: sample slide
- 2: buffer liquid
- 3: slide stage
- 4: slide fixing unit
- 5: vibration unit
- 6: vibration holding stage
- 7: slide conveying unit
- 8: temperature adjustment unit
- 9: heat transfer unit
- 9a: vibration side heat transfer unit
- 9b: lifting/lowering side heat transfer unit
- 10: heat insulation unit
- 11: lifting/lowering stage
- 11a: lifting/lowering stage upper portion
- 11b: lifting/lowering stage lower portion
- 12: lifting/lowering stage fixing unit
- 13: lifting/lowering link unit
- 13A, 13a, 13b, 13c, 13d, 14: vibration driving unit
- 15: elliptic cam
- 16: linear motion link unit
- 17: vibration fixing unit
- 18: lifting/lowering driving unit
- 19: linear motion unit
- 20: linear motion stage
- 21: lifting/lowering driving device fixing unit
- 22: driving fixing unit
- 23: lift holding unit

## Claims

1. A sample slide stirring device that stirs and mixes, through vibration, a buffer liquid on a sample slide on which a sample is held on the surface of the sample slide, and a stain reaction reagent required for staining the sample,
the sample slide stirring device comprising:
a slide stage holding the sample slide; a temperature adjustment unit performing temperature adjustment of the sample slide; a heat transfer unit transferring heat to the sample slide such that the temperatures of the temperature adjustment unit and the sample slide are substantially constant; and a lifting/lowering stage lifting and lowering a slide holding unit, wherein
when the buffer liquid and the stain reaction reagent are stirred, the lifting/lowering stage is lowered to separate, before the buffer liquid and the stain reaction reagent are vibrated, the heat transfer unit from a vibration unit vibrating the buffer liquid and the stain reaction reagent, and at the time of the heat transfer that transfers heat to the sample slide through the heat transfer unit, the lifting/lowering stage is lifted to bring the heat transfer unit into contact with the vibration unit.

2. The sample slide stirring device according to claim 1, wherein
the temperature adjustment unit performs the temperature adjustment such that the temperature of the stain reaction reagent on the sample slide is maintained at a predetermined temperature.

3. The sample slide stirring device according to claim 1, wherein
the lifting/lowering stage includes a lifting/lowering stage upper portion and a lifting/lowering stage lower portion, and in the slide holding unit, the heat transfer unit, the temperature adjustment unit, and a heat insulation unit provided downward of the temperature adjustment unit are configured to be supported by the lifting/lowering stage lower portion.

4. The sample slide stirring device according to claim 1, wherein
the vibration unit is connected with a vibration driving unit through an elliptic cam, a linear motion link unit, and a vibration fixing unit, and is vibrated by transmitting the driving force of the vibration driving unit through the elliptic cam, the linear motion link unit, and the vibration fixing unit.

5. The sample slide stirring device according to claim 3, wherein
the connection portions of the lifting/lowering stage upper portion and the lifting/lowering stage lower portion are disposed to be opposite to each other in a horizontal direction, and when the lifting/lowering stage is lowered, the connection portions of the lifting/lowering stage upper portion and the lifting/lowering stage lower portion are connected with each other, and when the lifting/lowering stage is lifted, the lifting/lowering stage upper portion is moved in the horizontal direction by the driving force of a lifting/lowering driving unit, thereby releasing the connection with the lifting/lowering stage lower portion.

6. The sample slide stirring device according to claim 5, wherein
when the lifting/lowering stage is lowered, the heat transfer unit connected with the lifting/lowering stage is lowered to be separated from the vibration unit, so that in this state, the vibration unit is vibrated.

7. The sample slide stirring device according to claim 5, wherein
when the lifting/lowering stage is lifted, the heat transfer unit connected with the lifting/lowering stage is lifted, so that the heat transfer unit is brought into contact with the vibration unit, and in a case where the sample slide is held to the vibration unit and at the time of the non-vibration in which the buffer liquid and the stain reaction reagent are not vibrated, the temperature of the buffer liquid on the sample slide is adjusted by the temperature adjustment unit.

8. The sample slide stirring device according to claim 5, wherein
the connection portions of the lifting/lowering stage upper portion and the lifting/lowering stage lower portion are formed in wedge shape.
